# EUROPÄISCHE PATENTANMELDUNG

(11) **EP 0 665 408 A1**
(43) Veröffentlichungstag der Anmeldung: **02.08.1995**
(21) Anmeldenummer: 95100716.0
(22) Anmeldetag: 19.01.1995
(51) Int. Cl.: F24D 17/00, F16L 39/00, F16L 19/02

(54) **Steigrohrleitung für die Warmwasserversorgung sowie den Warmwasserheizungsvorlauf eines mehrgeschossigen Gebäudes**

(30) Priorität: 01.02.1994 DE 9401635 U; 01.02.1994 DE 9401636 U; 22.02.1994 DE 9402929 U
(71) Anmelder: RAFELD KUNSTSTOFFTECHNIK GmbH & Co. KG, 87640 Ebenhofen (DE)
(72) Erfinder: Rafeld, Karl, D-87640 Ebenhofen (DE)
(74) Vertreter: Kern, Wolfgang, Dipl.-Ing.

(57) **Zusammenfassung**

Die Erfindung betrifft eine Steigrohrleitung für die Warmwasserversorgung sowie den Warmwasserheizungsvorlauf eines mehrgeschossigen Gebäudes, bei der auf jeder Etage ein Warmwasserabzweig bzw. Heizungswasserabzweig zur Versorgung der Verbraucher dieser Etage mit Warmwasser bzw. Heizungswasser vorgesehen ist.

Damit an den einzelnen Etagenabzweigen im wesentlichen einheitliche Vorlauftemperaturen für das Heizungswasser bzw. für die Warmwasserentnahme (Brauchwasser) auftreten, die in etwa der Wassertemperatur entsprechen, welche beim Austritt aus dem Heizungskessel bzw. Warmwasserboiler gemessen wird, wird vorgeschlagen, daß in die Steigrohrleitung (1) ein sich axial erstreckendes Zirkulationsrohr (2) eingebaut ist, das sich bis etwa zur Höhe der letzten Etage des Gebäudes erstreckt und über eine ständig arbeitende Pumpe (5) an den Heizungskessel (8) bzw. den Warmwasserboiler (8) der Heizungsanlage angeschlossen ist und durch das als Bestandteil eines Heizungswasser- bzw. Warmwasserzirkulationskreises, der ständig Heizungswasser aus dem Heizungskessel (8) bzw. Warmwasser aus dem Warmwasserboiler (8) den einzelnen Etagenabzweigen (20a, 20b, 20c) zuführt, Heizungswasser zurück in den Heizungskessel bzw. Warmwasser zurück in den Warmwasserboiler umwälzbar ist.

## Beschreibung

Die Erfindung betrifft eine Steigrohrleitung für die Warmwasserversorgung sowie den Warmwasserheizungsvorlauf eines mehrgeschossigen Gebäudes, bei der auf jeder Etage ein Warmwasserabzweig bzw.. Heizungswasserabzweig zur Versorgung der Verbraucher dieser Etage mit Warmwasser bzw. Heizungswasser vorgesehen ist, wobei der Warmwasserheizungsvorlauf an die Heizkörper bzw. Heizschlangen der jeweiligen Etage angeschlossen ist.

Derartige Steigrohrleitungen, die im Falle der Verwendung als Warmwasserheizungsvorlaufleitungen dazu dienen das aus dem Heizungskessel einer Gebäudeheizung geförderte Wasser den Heizkörpern bzw. Heizschlangen auf den verschiedenen Etagen des Gebäudes zur Verfügung zu stellen, welches nach dem Durchströmen dieser Heizkörper oder Heizschlangen in einer fallenden Rücklaufsammelleitung dem Heizungskessel zur erneuten Erwärmung wieder zugeführt wird, haben den Nachteil, daß das Vorlaufwasser an den Etagenabzweigen mit um so geringerer Temperatur zur Verfügung steht, je weiter die Etage vom Heizungskessel entfernt ist, d. h., mit zunehmender Stockwerkzahl des Gebäudes verringert sich die Temperatur des Heizungswassers, das in die Heizkörper bzw. Heizschlangen eingespeist wird. Dies ist insbesondere dann der Fall, wenn die Vorlaufabzweige der einzelnen Etagen in Reihe geschaltet sind, so daß der Rücklauf jeder Etage als Vorlauf der nächstfolgenden Etage zugeführt wird, tritt jedoch, allerdings in wesentlich abgeschwächtem Maße, auch in den Fällen auf, in denen jeder Vorlaufabzweig direkt mit der Vorlaufleitung in Verbindung steht, die einzelnen Etagen also parallel geschaltet sind. Ein solcher Temperaturverlust des Vorlaufheizungswassers konnte bisher auch durch eine gute Wärmeisolierung der Steigrohrleitung bzw. der Vorlaufetagenabzweige nicht verhindert werden.

Auch bei der Versorgung von Mehretagenhäusern mit Warmwasser wurde bisher festgestellt, daß die diesbezüglichen Steigrohrleitungen den Nachteil aufweisen, daß das Warmwasser wegen des Abkühlungseffektes an den Etagenabzweigen mit um so geringerer Temperatur zur Verfügung steht, je weiter die Etage vom Heizungsboiler bzw. der das Warmwasser, also das sogenannte Brauchwasser, liefernden Heizungsanlage entfernt ist. Das heißt, mit zunehmender Stockwerkzahl verringert sich die Temperatur des Warmwassers insbesondere dann, wenn längere Zeit kein Warmwasser verbraucht wird. Wird also nach längerem Stillstand der Warmwasserzufuhr Warmwasser benötigt, dann wird zunächst eine mehr oder weniger große Menge kalten Wassers an die Verbrauchsstelle geliefert, bis Brauchwasser ausreichender Temperatur nachgelaufen ist. Dies kann insbesondere in den höheren Stockwerken eines mehrgeschossigen Gebäudes ziemlich lange dauern und zu erheblichen Wasserverlusten führen, weil das aus den Zapfstellen ausströmende Wasser in der Regel ungenutzt abläuft.

Die Aufgabe der Erfindung besteht deshalb darin, die Steigrohrleitung so auszubilden, daß an den einzelnen Etagenabzweigen im wesentlichen einheitliche Vorlauftemperaturen des Heizungswassers bzw. des Warmwassers (Brauchwassers) auftreten, die darüber hinaus in etwa der Wassertemperatur entsprechen, welche beim Austritt aus dem Heizungskessel bzw. dem Warmwasserboiler der Heizungsanlage gemessen wird, so daß in den Heizkörpern und Heizschlangen bzw. den Warmwasserzapfstellen beim Öffnen der Ventile in den einzelnen Etagen sofort Heizungswasser bzw. Warmwasser mit in etwa Kesseltemperatur zur Verfügung steht.

Diese Aufgabe wird erfindungsgemäß dadurch gelöst, daß in die Steigrohrleitung ein sich axial erstreckendes Zirkulationsrohr eingebaut ist, das sich bis etwa zur Höhe der letzten Etage des Gebäudes erstreckt und über eine ständig arbeitende Pumpe an den Heizungskessel bzw. den Warmwasserboiler der Heizungsanläge angeschlossen ist und durch das als Bestandteil eines Heizungswasser- bzw. Warmwasserzirkulationskreises, der ständig Heizungswasser aus dem Heizungskessel bzw. Warmwasser aus dem Warmwasserboiler den einzelnen Etagenabzweigen zuführt, Heizungswasser zurück in den Heizungskessel bzw. Warmwasser zurück in den Warmwasserboiler umwälzbar ist.

Vorteilhafte Ausgestaltungen der Erfindung sind in den Unteransprüchen gekennzeichnet.

Die Erfindung wird nachfolgend anhand der in der Zeichnung dargestellten Ausführungsbeispiele näher erläutert. In der Zeichnung zeigen:
- Fig. 1: eine Längsschnittansicht eines Teils einer Steigrohrleitung für Heizungswasser bzw. Warmwasser mit angeschlossenem Heizungskessel bzw. Warmwasserboiler, und
- Fig. 2: eine vergrößerte Schnittansicht der mit X bezeichneten Einzelheit der Konstruktion von Fig. 1.

Die Steigrohrleitung 1 ist in einem mehrgeschossigen Gebäude verlegt und fördert entweder Heizungswasser vom Heizungskessel 8 einer nicht dargestellten Heizungsanlage , die gewöhnlich im Keller des betreffenden Gebäudes untergebracht ist, zu den einzelnen Etagenabzweigen 20a, 20b, 20c oder sie fördert Warmwasser, also Brauchwasser oder Trinkwasser, aus einem ebenfalls mit 8 bezeichneten Warmwassserboiler einer nicht dargestellten Heizungsanläge aus dem Keller eines Gebäudes zu den auf den einzelnen Etagen 20a, 20b, 20c befindlichen Zapfstellen. Die Steigrohrleitung 1 besteht aus mehreren hintereinander geschalteten Leitungsabschnitten 3a, 3b, 3c, die durch als T-Stücke ausgebildete Etagenabzweigmuffenstücke 4b, 4c, 4d miteinander verbunden sind. Als Leitungsmaterial dient Kunststoff aus dem auch die T-Stücke bestehen.

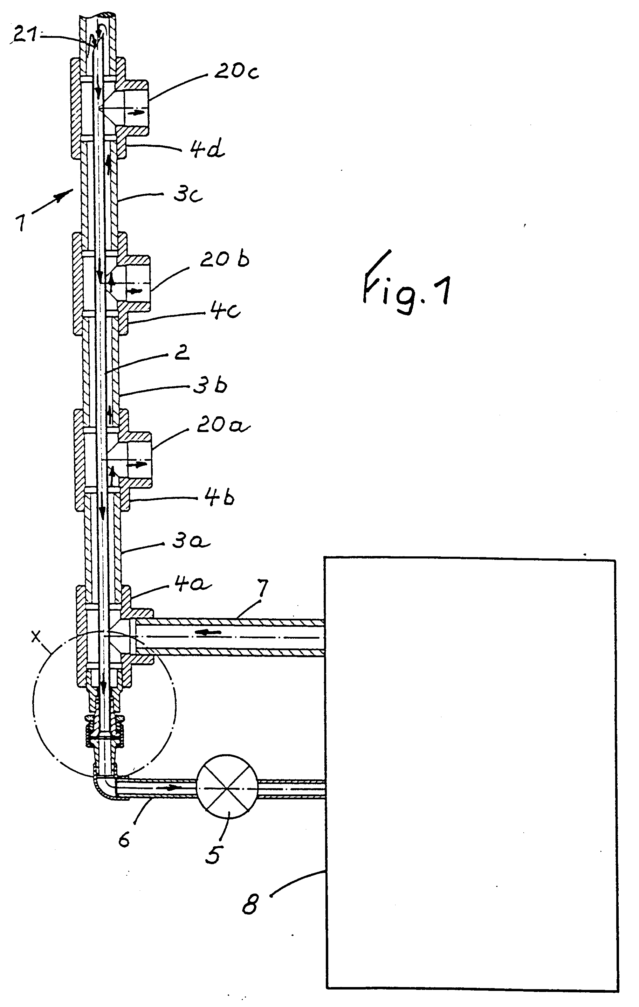

In der Steigrohrleitung 1 erstreckt sich axial ein Zirkulationsrohr 2 bis etwa zur letzten Etage, dessen oberes Ende 21 an eine in ein Anschlußleitungsrohr 6 eingebaute, ständig arbeitende Pumpe 5 an den Heizungskessel 8 bzw. den Warmwasserboiler der Heizungsanlage angeschlossen ist, wie aus Fig. 1 ersichtlich. Das ebenfalls aus Kunststoff bestehende Zirkulationsrohr 2 ist Bestandteil eines Heizungswasserzirkulationskreises bzw. Warmwasserzirkulationskreises, der ständig Heizungswasser bzw. Warmwasser aus dem Kessel bzw. Boiler 8 über das Anschlußleitungsrohr 7 zu den einzelnen Etagenabzweigen 20a, 20b, 20c fördert. Dieses so geförderte Wasser tritt in das obere Ende 21 des Zirkulationsrohres 2 ein, um in diesem abwärts zu strömen und an dessen unterem Ende über das Anschlußleitungsrohr 6 in den Heizungskessel 8 bzw. Warmwasserboiler zurückzuströmen. Auf diese Weise werden in jeder Etage unmittelbar nach dem Öffnen der Ventile die Heizkörper oder Heizschlangen mit Heizungswasser beschickt, weil bei geschlossenen Heizkörperventilen die Heizungswasserzirkulation mit Hilfe der Pumpe 5 und des Zirkulationsrohres 2 aufrechterhalten wird. Gleichermaßen steht unmittelbar nach dem Öffnen der Warmwasserzapfstellen in den einzelnen Etagen dort Warmwasser zur Verfügung, wenn die Pumpe 5 Bestandteil eines Warmwasserzirkulationskreises ist, da aus demselben Grunde wie beim Heizungswasser auch bei geschlossenen Ventilen das Warmwasser (Brauchwasser) mit Hilfe der Pumpe 5 ständig umgewälzt wird.

Das obere Ende 21 des Zirkulationsrohres 2 ist abgeschrägt zu dem Zweck, die Montage dieses Rohres durch Einschieben in die Steigrohrleitung zu erleichtern. Anstelle dieser aus der Zeichnung ersichtlichen Abschrägung ist jedoch auch ein abgerundeter Verschluß denkbar, wobei dann das Rohr im Bereich des oberen Endes 21 seitliche Öffnungen für den Wassereintritt aufweist.

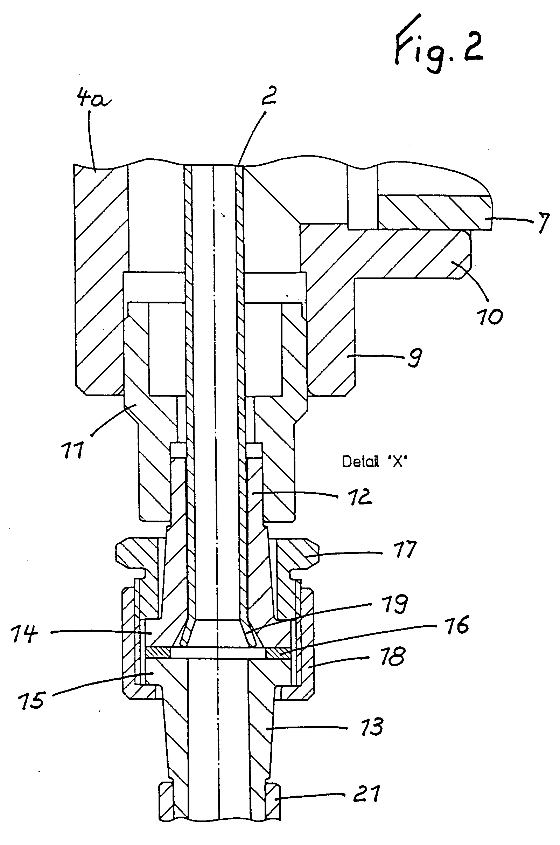

Das untere Ende 19 des Zirkulationsrohres 2 ist, wie aus Fig. 2 ersichtlich, zwischen zwei mit ihren Stirnflanschen 14,15 über eine Dichtung 16 aufeinanderstoßenden Führungshülsen 12,13 eingespannt, von denen die obere 12 das Zirkulationsrohr 2 umgibt und eine Bohrung aufweist, die sich nach unten zu, also in Richtung auf das untere Ende 19 des Zirkulationsrohres, konisch verjüngt. Die beiden Führungshülsen 12,13 sind mit Stirnflanschen 14,15 versehen, welche durch eine Druckverschraubung 17,18 gegen die Dichtung 16 gepreßt werden. Das untere Ende 19 der unteren Führungshülse 13 ist mit der Anschlußleitung 6 verbunden, in der sich die Umwälzpumpe 5 befindet, die, wie oben ausgeführt, entweder zum Umwälzen von Heizungswasser benutzt wird für den Fall, daß der Erfindungsvorschlag bei einer Heizungswasser liefernden Heizungsanlage verwirklicht ist, oder Warmwasser liefert, falls der Erfindungsvorschlag für die Warmwasser-, also Brauchwasserförderung aus einem entsprechenden Warmwasserboiler zu den einzelnen Etagen und von dort zurück zum Boiler bzw. in die angeschlossene Heizungsanlage benutzt wird.

Ein Kupplungsstück 11 umfaßt das obere Ende der oberen Führungshülse 12 und verbindet dieses Ende mit dem Anschlußstück 9 des untersten T-Stücks 4a, dessen rechtwinkeliger Abzweig 10 mit der Anschlußrohrleitung 7 verbunden ist, durch die das in der Steigrohrleitung 1 abwärts geführte Wasser in den Heizungskessel 8 bzw. Warmwasserboiler 8 zurückkehrt.

Das untere Ende 19 des Zirkulationsrohres 2 ist konisch aufgeweitet und gegen die Dichtung 16 gerichtet, und da die Innenbohrung der Führungshülse 12, wie oben ausgeführt, sich in Abwärtsrichtung konisch verjüngt und das konisch aufgeweitete Ende 19 jenseits der engsten Stelle dieser Verjüngung angeordnet ist, wird das Zirkulationsrohr 2 in die Steigrohrleitung mit Hilfe der Druckverschraubung 17,18 fest verankert.

## Patentansprüche

1. Steigrohrleitung für die Warmwasservesorgung sowie den Warmwasserheizungsvorlauf eines mehrgeschossigen Gebäudes, bei der auf jeder Etage ein Warmwasserabzweig bzw. Heizungswasserabzweig zur Versorgung der Verbraucher dieser Etage mit Warmwasser bzw. Heizungswasser vorgesehen ist, **dadurch gekennzeichnet, daß** in die Steigrohrleitung (1) ein sich axial erstreckendes Zirkulationsrohr (2) eingebaut ist, das sich bis etwa zur Höhe der letzten Etage des Gebäudes erstreckt und über eine ständig arbeitende Pumpe (5) an den Heizungskessel (8) bzw. den Warmwasserboiler (8) der Heizungsanlage angeschlossen ist und durch das als Bestandteil eines Heizungswasser- bzw. Warmwasserzirkulationskreises, der ständig Heizungswasser aus dem Heizungskessel (8) bzw. Warmwasser aus dem Warmwasserboiler (8) den einzelnen Etagenabzweigen (20a, 20b, 20c) zuführt, Heizungswasser zurück in den Heizungskessel bzw. Warmwasser zurück in den Warmwasserboiler umwälzbar ist.

2. Steigrohrleitung nach Anspruch 1, **dadurch gekennzeichnet, daß** die Pumpe (5) das Heizungswasser bzw. Warmwasser ständig aus dem Heizungskessel bzw. dem Warmwasserboiler in die Steigrohrleitung (1) und damit zu den einzelnen Etagenabzweigen (20a, 20b, 20c) und in das obere Ende (21) des Zirkulationsrohres (2) fördert, durch das es in den Heizungskessel (8) bzw. den Warmwasserboiler (8) zurückströmt.

3. Steigrohrleitung nach Anspruch 1 oder 2, **dadurch gekennzeichnet, daß** das Zirkulationsrohr (2), alle Anschlußleitungsrohre (6,7) und Steigrohrleitungsabschnitte (3a, 3b, 3c) sowie Etagenabzweigmuffenstücke (4b, 4c, 4d) aus Kunststoff bestehen.

4. Steigrohrleitung nach einem der Ansprüche 1 bis 3, **dadurch gekennzeichnet, daß** das obere Ende (21) des Zirkulationsrohres (2) abgeschrägt ist.

5. Steigrohrleitung nach einem der Ansprüche 1 bis 3, **dadurch gekennzeichnet, daß** das obere Ende (21) des Zirkulationsrohres (2) einen abgerundeten Verschluß aufweist sowie seitliche Öffnungen für den Wasseraustritt.

6. Steigrohrleitung nach einem der Ansprüche 1 bis 5, **dadurch gekennzeichnet, daß** das untere Ende (19) des Zirkulationsrohres (2) zwischen zwei mit ihren Stirnflanschen (14, 15) über eine Dichtung (16) aufeinanderstoßenden Führungshülsen (12,13) eingespannt ist, deren Flansche (14, 15) durch eine Druckverschraubung (17, 18) gegen die Dichtung (16) gepreßt werden.

7. Steigrohrleitung nach Anspruch 6, **dadurch gekennzeichnet, daß** das untere Ende (19) des Zirkulationsrohres (2) aufgeweitet und gegen die Dichtung (16) gerichtet ist.
